# FASCICULE DE BREVET EUROPEEN

(11) **EP 1 187 355 B1**
(45) Date de publication et mention de la délivrance du brevet: **21.04.2004**
(21) Numéro de dépôt: 01000419.0
(22) Date de dépôt: 04.09.2001
(51) Int. Cl.: H04B 1/40

(54) **Appareil multimode comportant un dispositif d'émission réception de signaux minimisant les moyens nécessaires pour gérer les différents modes**
Multimodales Gerät mit eine Sende-Empfangs-Vorrichtung zur Minimierung der notwendigen Mitteln zur Modenverwaltung
Multimode apparatus containing a transmission/reception circuitry for signals minimizing the necessary means for managing different modes

(30) Priorité: 07.09.2000 FR 0011431
(43) Date de publication de la demande: 13.03.2002
(73) Titulaire: SAGEM S.A., 75015 Paris (FR)
(72) Inventeur: Romao, Fernando, 78360 Montesson (FR)
(74) Mandataire: Schmit, Christian Norbert Marie

(56) Documents cités:
- EP-A- 0 744 831
- EP-A- 0 829 970
- WO-A-00/65734

## Description

L'invention a pour objet un appareil multimode comportant un dispositif d'émission réception de signaux minimisant les moyens nécessaires pour la gestion des différents modes. Le domaine de l'invention est celui des appareils communiquant, pouvant communiquer selon plusieurs modes. En général un mode de communication est associé à une norme. Parmi ces normes on peut par exemple citer la norme DECT, les normes GSM, DCS, PCS, UMTS ainsi que d'autres, la liste n'est pas exhaustive. Le domaine de l'invention inclut en particulier le domaine de la téléphonie mobile.

Un but de l'invention est de réaliser de tels appareils en minimisant le nombre de composants nécessaires pour implanter la gestion des différentes normes de télécommunication dans l'appareil. On obtient ainsi des appareils ayant un plus faible encombrement. Un autre but de l'invention est de réduire le coût de production de tels appareils.

Dans l'état de la technique on connaît déjà des téléphones mobiles multimodes. Dans la pratique il s'agit de téléphones bimodes ou tri modes. Ces téléphones utilisent des normes de type GSM qui sont les normes GSM, DCS, et PCS.

Ces normes décrivent des modulations de type GSM utilisant des fréquences porteuses dans les gammes de fréquence de 900 mégahertz, 1800 mégahertz et 1900 mégahertz. Ces normes sont des normes dans lesquelles les signaux produits et reçus sont multiplexés temporellement.

Dans l'état de la technique un téléphone trimode fonctionne donc selon les normes GSM, PCS et DCS. L'étage d'entrée-sortie des signaux radioélectriques d'un tel téléphone mobile se compose donc d'une antenne connectée à un switch. Le switch est suivi d'autant de chaînes de traitement des signaux reçus que de modes selon lesquels le téléphone est capable de fonctionner, ainsi que des chaînes de production de signaux. Dans l'exemple d'un téléphone trimode, le switch sera donc suivi de quatre chaînes de traitement de signal. Une chaîne de traitement de signal reçu est composée d'au moins un filtre de sélection de bandes afin de ne traiter que les signaux intéressant la norme pour laquelle la chaîne est prévue, et d'un amplificateur prévue, et d'un amplificateur car les signaux reçus sont souvent très faibles. Une chaîne de production de signal comporte au moins un amplificateur afin d'émettre des signaux suffisamment puissants pour qu'il puissent être captés par une station de base à laquelle est connecté le téléphone trimode. Toutes ces chaînes sont alors connectées à un switch de sélection de la chaîne, émission ou réception, activé à un instant donné. L'étage d'entrée-sortie radioélectrique d'un téléphone trimode comporte donc une antenne, un switch, trois filtres, quatre amplificateurs et un circuit de modulation-démodulation.

Le document EP-A-0 829 970 décrit un téléphone bi-mode comportant un dispositif d'émission réception de signaux radioélectriques fonctionnant selon plusieurs normes (FDD et TDD) comportant
- des premier moyens pour aiguiller des signaux reçus par l'appareil vers une chaîne de traitement, l'appareil utilisant une chaîne pour traiter deux normes,
- des deuxièmes moyens pour aiguiller des signaux produits par l'appareil vers une antenne de l'appareil, l'antenne étant commune aux deux normes.

Si l'on souhaite que le téléphone mobile puisse aussi fonctionner selon une norme dans laquelle des signaux reçus et produits sont multiplexés en fréquence, il faut prévoir un autre switch en lieux et place de l'antenne: Ce nouveau switch est connecté d'une part à l'antenne, d'autre part au premier switch et enfin à un duplexer, ou duplexeur, qui permet de différencier les signaux reçus et les signaux produits. Les signaux reçus seront traités par une nouvelle chaîne de traitement comportant au moins un amplificateur et un filtre, les signaux produits seront au moins amplifiés.

Ainsi dans l'état de la technique un téléphone multimode comporte en entrée-sortie, une antenne, deux switchs, un duplexer, quatre filtres , six amplificateurs et un circuit de modulation-démodulation.

Le résultat est donc un étage d'entrées-sorties radioélectriques très volumineux et comportant de nombreux composants, donc coûteux.

De plus les amplificateurs et les autres composants consomment de l'énergie. Leur présence nuit donc à l'autonomie du téléphone qui se trouve d'autant plus diminuée que les amplificateurs sont nombreux.

Dans l'invention on résout ces problèmes en utilisant une chaîne de réception unique comportant un amplificateur et un filtre sélecteur à fréquence de sélection variable. Ce dispositif comporte aussi une chaîne de production de signaux pour les normes à multiplexage temporel, et une chaîne de production de signaux pour les normes à multiplexage fréquentiel. Ces différentes chaînes de production et de réception sont connectées à une antenne via un dispositif d'aiguillage qui permet de paramétrer l'étage d'entrée en fonction du mode de fonctionnement du téléphone mobile. Pour un téléphone multimode, la solution de l'invention comporte donc une antenne, trois sélecteurs, un duplexer, trois amplificateurs, un filtre, et un circuit de modulation-démodulation. Le nombre de composants, ainsi que la puissance nécessaire à leur alimentation, se trouvent donc fortement diminués par rapport à l'état de la technique. On remarque aussi que les switch utilisés dans l'invention sont extrêmement simples puisqu'ils n'ont qu'une entrée et deux sorties. Les switchs de l'état de la technique comportaient une entrée et quatre sorties. Un tel switch pourrait être réalisé à l'aide de trois switchs simples tels que ceux utilisés dans l'invention. Le nombre de switchs utilisés dans l'invention est donc inférieur au nombre de switchs nécessaires pour réaliser un appareil selon l'état de la technique.

L'invention a donc pour objet un appareil comportant un dispositif d'émission réception de signaux radioélectriques fonctionnant selon plusieurs normes caractérisé en ce que le dispositif comporte:
- des premier moyens pour aiguiller des signaux reçus par l'appareil vers une chaîne de traitement correspondant à la norme des signaux, le nombre de chaîne de traitement des signaux reçus étant inférieur au nombre de normes selon lesquelles l'appareil peut fonctionner,
- des deuxièmes moyens pour aiguiller des signaux .produits par l'appareil vers une antenne de l'appareil, le nombre d'antennes étant inférieur au nombre de normes selon lesquelles l'appareil peut fonctionner,
- les premiers et deuxièmes moyens sont mis en commun, au delà d'un moyen directement connecté à l'antenne, pour l'aiguillage des signaux indépendamment de la norme de ces signaux.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 une illustration d'un dispositif selon l'invention.
- Figure 2 une illustration d'une implantation d'un sélecteur.

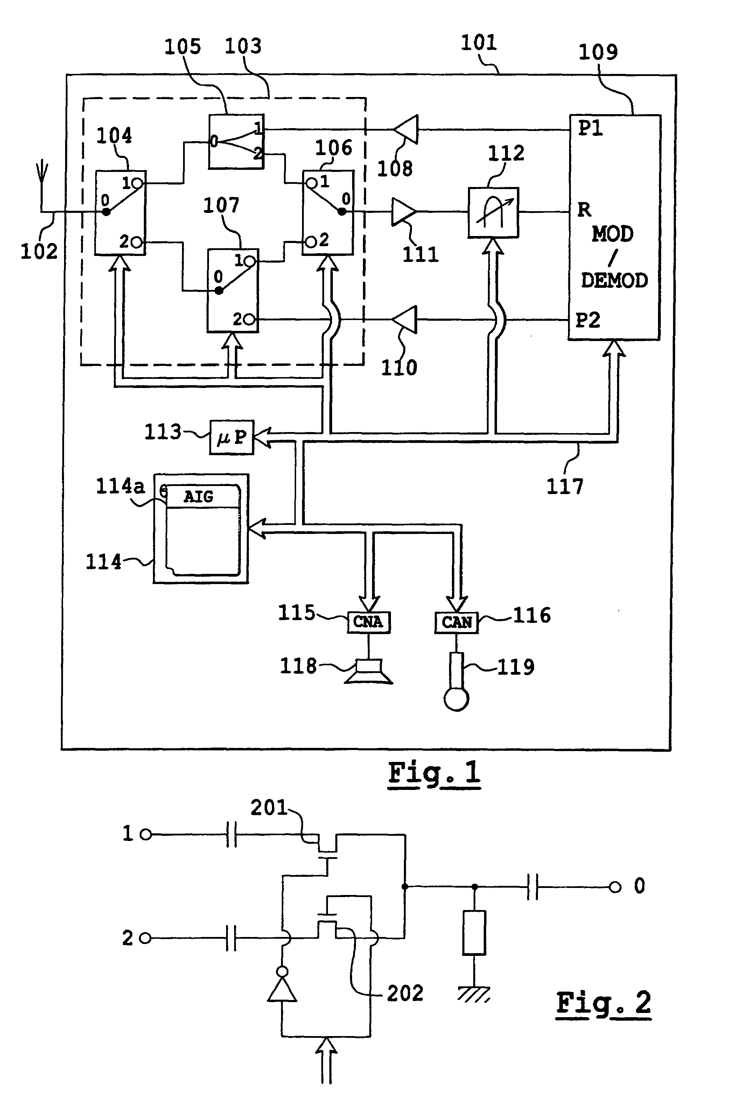

La figure 1 montre un appareil 101. Dans la description qui suit on considère que l'appareil 101 est un téléphone 101 mobile. Le téléphone 101 comporte une antenne 102 connectée à un dispositif 103 d'aiguillage de signaux radioélectriques.

L'antenne 102 est connectée à un sélecteur 104. Le sélecteur 104 comporte trois ports. Un premier port 0 auquel est connectéel'antenne 102, qui peut être connecté, grâce à la fonction de sélection du sélecteur 104, à un port 1 ou à un port 2. Le port 1 du connecteur 104 est connecté à un duplexer 105. Le duplexer 105 comporte trois ports, les ports 0, 1 et 2. Sur la connexion entre le port 105-0 et le port 104-1 circulent des signaux que le duplexer 105 multiplexe et démultiplexe. Le port 105-2 est connecté à un port 1 d'un sélecteur 106. Le sélecteur 106 comporte trois ports, les ports 0, 1 et 2.

Le port 104-2 est connecté à un port 0 d'un sélecteur 107. Le sélecteur 107 permet d'établir une connexion entre le port 0 et un port 1 du sélecteur 107, ou entre le port 107-0 et 107-2. Le port 107-1 est connecté au port 106-2. Le sélecteur 106 permet d'établir une connexion entre le port 106-1 et le port 106-0 ou entre le port 106-2 et le port 106-0. Les éléments 104 à 107 forment le dispositif d'aiguillage. Les éléments 104 et 106 sont des moyens pour aiguiller des signaux radioélectriques en fonction de leur nature. S'il s'agit de signaux multiplexés en fréquence ils seront aiguillés vers le duplexer 105, s'il s'agit de signaux multiplexés temporellement ils seront dirigés vers le sélecteur 107.

Les éléments 105 et 107 sont des moyens pour aiguiller les signaux en fonction du fait qu'ils sont reçus ou produits par l'appareil 101. Les éléments 104 à 107 sont étroitement imbriqués.

Le port 105-1 est connecté à la sortie d'un amplificateur 108 dont l'entrée est connectée à une sortie P1 de circuits 109 de modulation-démodulation.

Le rôle des circuits 109 est de démoduler des signaux reçus via l'antenne 102 ou de produire des signaux modulés à partir de données numériques, ces signaux produits étant destinés à être diffusés par l'antenne 102. Dans un exemple on considère que le téléphone 101 peut fonctionner selon la norme GSM et la norme UMTS. La sortie 109 P1 produit donc des signaux UMTS. Ces signaux UMTS sont amplifiés par l'amplificateur 108 et multiplexés par le duplexer 105.

Le port 107-2 est connecté à la sortie d'un amplificateur 110 dont l'entrée est connectée à une sortie P2 des circuits 109. La sortie 109 P2 fournit des signaux modulés suivant la norme GSM. Dans la pratique cette sortie P2 fournit des signaux modulés selon une norme à multiplexage temporel des signaux produits et reçus. C'est-à-dire que dans une variante de la description la sortie P2 fournit des signaux selon l'une des normes GSM, DCS, PCS ou autre. Il est entendu qu'un téléphone selon l'invention peut produire des signaux selon plusieurs normes.

Le port 106.0 est connecté à l'entrée d'un amplificateur 111. La sortie de l'amplificateur 111 est connectée à l'entrée d'un filtre 112 sélectif à fréquence sélectionnée variable ou commutable. La sortie du filtre 112 est connectée à une entrée R des circuits 109. L'amplificateur 111 et le filtre 112 forment une chaîne de traitement des signaux reçus.

La figure 1 montre aussi que le téléphone 101 comporte un microprocesseur 113, une mémoire 114, un convertisseur numérique analogique 115 et un convertisseur analogique numérique 116. Les éléments 104, 106, 107, 109, 112 et 113 à 116 sont connectés à un bus 117. Un bus est un ensemble de fils ou de pistes comportant ces éléments en nombre suffisant pour véhiculer des signaux de commandes, de données, d'adresses, d'interruptions, d'horloges et d'alimentation.

Le convertisseur 115 est connecté à un haut-parleur 118, le convertisseur 116 est connecté à un microphone 119. La mémoire 114 comporte, entre autres, des codes instructions qui commandent le microprocesseur 113. La mémoire 114 comporte aussi des zones de donnée et des zones de travail utiles lors de l'exécution de certaines tâches par le microprocesseur 113. En particulier la mémoire 114 comporte une zone 114a qui comporte des codes instructions qui commandent le microprocesseur 113 lorsque celui-ci doit aiguiller des signaux à travers le dispositif 103.

Lorsque le téléphone 101 fonctionne en mode UMTS, l'utilisateur de ce téléphone parle dans le microphone 119. Les signaux analogiques produits par le microphone 119 sont convertis en données numériques par le convertisseur 116. Ces signaux convertis sont alors fournis au circuit 109 via le bus 117. Le microprocesseur 113 commande alors les sélecteurs 104 et 106. Le sélecteur 104 est positionné afin d'établir une liaison entre le port 104-0 et le port 104-1, le sélecteur 106 est positionné afin d'établir une liaison entre le port 106-0 et le port 106-1. Ainsi les signaux UMTS produits par les circuits 109 seront amplifiés par l'amplificateur 108, mutiplexés par le duplexeur 105 et finalement diffusés par l'antenne 102. Les signaux UMTS reçus par l'antenne 102 du téléphone 101 seront démultiplexées par le duplexer 105, et dirigées par ce même duplexer sur le port 106-1. Un duplexer se compose en fait de deux lignes adaptées connectées entre elles par l'une de leurs extrémités. Ces lignes sont chacune adaptées pour une fréquence. En UMTS les fréquences d'émission et de réception ne sont pas les mêmes mais les signaux entrant et sortant circulent en même temps. Il s'agit d'un multiplexage fréquentiel. L'adaptation des deux lignes du duplexer permet de définir deux chemins distincts, l'un pour les signaux entrant l'autre pour les signaux sortant.

Les signaux UMTS entrant sont ainsi redirigés vers le circuit 109 via l'amplificateur 111 et le filtre 112. Lorsque le téléphone 101 est en mode UMTS, le microprocesseur 113 commande aussi la fréquence de sélection du filtre 112. En mode UMTS, les fréquences de sélection du filtre 102 sont aux alentours de 2,1 gigahertz. Le filtre 112 permet de sélectionner une bande de fréquence parmi les bandes de fréquence définies par la norme UMTS.

Les signaux reçus par les circuits 109 sont donc démodulés pour produire des informations numériques qui sont utilisées par le microprocesseur 113 qui les redirige vers le convertisseur 115 afin que celui-ci les convertisse en signaux analogiques qui peuvent être diffusés par le haut-parleur 118.

Lorsque le téléphone 101 fonctionne en mode GSM, le microprocesseur 113 commande le sélecteur 104 afin qu'il établisse une connexion entre les ports 104-0 et les ports 104-2, le sélecteur 106 afin d'établir une connexion entre les ports 106-0 et 106-2 et le sélecteur 107 est commandé en fonction du fait que le téléphone 101 est en émission ou en réception. Lorsque le téléphone 101 est en réception le sélecteur 107 établit une connexion entre les ports 107-0 et les ports 107-1. Lorsque le téléphone est en émission le sélecteur 107 établit une connexion entre les ports 107-0 et les ports 107-2. En effet la norme GSM est une norme à multiplexage temporel. Les signaux émis et reçus ne sont donc pas émis et reçus en même temps.

On constate donc que le téléphone 101 comporte une seule chaîne de traitement des signaux reçus. Cette chaîne est composée par l'amplificateur 111 et le filtre 112. En mode GSM le filtre 112 permet aussi de sélectionner une bande de fréquence parmi celles utilisées par la norme GSM. En mode GSM les fréquences de sélection du filtre 112 se situent aux alentours de 900 mégahertz. Cependant si le téléphone 101 peut fonctionner selon d'autres modes de type GSM, par exemple PCS ou DCS, le filtre 112 peut aussi permettre de sélectionner des fréquences de sélection parmi les bandes de fréquence de ces normes.

La figure 2 illustre un mode d'implantation possible pour l'interrupteur 106. La figure 2 montre que le port 106-1 est connecté à un transistor 201 qui est aussi connecté au port 106-0. Le port 106-2 est connecté à un transistor 202 qui est aussi connecté au port 106-0. Les transistors 201 et 202 sont commandés via leurs grilles. Le signal de commande arrive, par exemple, via le bus 117. Ce signal est appliqué directement sur la grille du transistor 202, et il est inversé avant d'être appliqué sur la grille du transistor 201. Ainsi les transistors 202 et 201 ne sont jamais passant en même temps. Cela permet donc de sélectionner une connexion. Soit le transistor 201 est passant et on établit la connexion entre le port 106-0 et le port 106-1. Soit le transistor 202 est passant et on établit la connexion entre le port 106-0 et le port 106-2. Il existe bien-sûr d'autres modes de réalisation pour les sélecteurs du dispositif 103. Un autre mode utilise par exemple des diodes que l'on polarise en fonction de celle que l'on veut rendre passante.

## Revendications

1. Appareil (101) comportant un dispositif (102 -112) d'émission réception de signaux radioélectriques fonctionnant selon plusieurs normes, lequel dispositif comporte:
- des premier moyens (104, 106) pour aiguiller des signaux reçus par l'appareil vers une chaîne de traitement correspondant à la norme des signaux, le nombre de chaînes de traitement des signaux reçus étant inférieur aux nombre de normes selon lesquelles l'appareil peut fonctionner,
- des deuxièmes moyens (105, 107) pour aiguiller des signaux .produits par l'appareil vers une antenne de l'appareil, le nombre d'antennes étant inférieur au nombre de normes selon lesquelles l'appareil peut fonctionner,
- les premiers et deuxièmes moyens formant un dispositif d'aiguillage pour l'aiguillage des signaux en fonction de la nature fréquentielle ou temporelle de leur multiplexage, ces moyens comportant un premier sélecteur (104) qui permet d'établir un circuit entre une antenne et:
- soit un duplexeur (105) pour les signaux selon une norme à multiplexage fréquentiel,
- soit un deuxième sélecteur (107) pour les signaux selon une norme à multiplexage temporel.

2. Appareil selon la revendication 1, **caractérisé en ce que** le dispositif comporte une chaîne (111, 112, 109) de traitement des signaux reçus comportant un filtre (112) pour sélectionner un signal dans une gamme de fréquence et capable de traiter des signaux correspondant à plusieurs normes.

3. Appareil selon la revendication 1, **caractérisé en ce que** le duplexeur permet de duplexer des signaux entre:
- une chaîne (108, 109) de production de signaux selon une norme à multiplexage fréquentiel, et
- une première sortie d'un troisième sélecteur (106).

4. Appareil selon la revendication 3, **caractérisé en ce que** le deuxième sélecteur permet d'établir un circuit entre le premier sélecteur et:
- soit une deuxième sortie du troisième sélecteur,
- soit une chaîne (110, 109) de production de signaux selon une norme à multiplexage temporel.

5. Appareil selon la revendication 4, **caractérisé en ce que** le troisième sélecteur permet d'établir un circuit entre une chaîne de réception de signaux et:
- soit le duplexeur,
- soit le deuxième sélecteur.

6. Appareil selon l'une des revendications 1 à 5 **caractérisé en ce que** l'appareil est un téléphone mobile.

## Claims

1. Device (101) comprising a unit (102 - 112) for transmission and reception of radio electrical signals operating in accordance with a plurality of standards, which unit comprises:
- first means (104, 106) for routing signals received by the device to a processing chain corresponding to the standard of the signals, the number of processing chains for the signals received being less than the number of standards in accordance with which the device can operate;
- second means (105, 107) for routing signals produced by the device to an antenna of the device, the number of antennas being less than the number of standards in accordance with which the device can operate;
- the first and second means forming a routing unit for routing of the signals according to whether they are frequency-division or time-division multiplexed, these means comprising a first selector (104) which makes it possible to establish a circuit between an antenna and:
- either a duplexer (105) for the signals in accordance with a frequency-division multiplexing standard,
- or a second selector (107) for signals in accordance with a time-division multiplexing standard.

2. Device according to claim 1, **characterised in that** the unit comprises a chain (111, 112, 109) for processing of the signals received comprising a filter (112) for selecting a signal from a frequency range and capable of processing signals corresponding to a plurality of standards.

3. Device according to claim 1, **characterised in that** the duplexer makes it possible to duplex signals between:
- a chain (108, 109) for production of signals in accordance with a frequency-division multiplexing standard, and
- a first output of a third selector (106).

4. Device according to claim 3, **characterised in that** the second selector makes it possible to establish a circuit between the first selector and:
- either a second output of the third selector,
- or a chain (110, 109) for production of signals in accordance with a time-division multiplexing standard.

5. Device according to claim 4, **characterised in that** the third selector makes it possible to establish a circuit between a chain for reception of signals and:
- either the duplexer,
- or the second selector.

6. Device according to one of claims 1 to 5, **characterised in that** the device is a mobile telephone.

## Patentansprüche

1. Gerät (101) mit einer Sende-Empfangs-Vorrichtung (102-112) für Funksignale gemäß mehrerer Normen, die Folgendes umfasst:
- erste Mittel (104, 106) zum Leiten der vom Gerät empfangenen Signale zu einer Signalverarbeitungskette gemäß der Norm des Signals, wobei die Anzahl der Signalverarbeitungsketten kleiner ist als die Anzahl der Normen, gemäß derer das Gerät arbeiten kann,
- zweite Mittel (105, 107) zum Leiten der vom Gerät erzeugten Signale zu einer Antenne des Geräts, wobei die Anzahl der Antennen kleiner ist als die Anzahl der Normen, nach denen das Gerät arbeiten kann,
- wobei die ersten und zweiten Mittel eine Leiteinrichtung zum Leiten der Signale in Abhängigkeit davon, ob sie ein Frequenz- oder Zeitmultiplexmerkmal aufweisen, und wobei die Mittel eine erste Auswahleinrichtung (104) umfassen zur Schaltung eines Kreises zwischen einer Antenne und
- entweder einem Duplexer (105) für die Signale gemäß einer Frequenzmultiplexnorm,
- oder einer zweiten Auswahleinrichtung (107) für die Signale gemäß einer Zeitmultiplexnorm.

2. Gerät nach Anspruch 1, **dadurch gekennzeichnet, dass** die Vorrichtung eine Signalverarbeitungskette (111, 112, 109) für die empfangenen Signale mit einem Filter (112) umfasst, um ein Signal aus einem Frequenzbereich auszuwählen, die imstande ist, Signale gemäß verschiedenen Normen zu verarbeiten.

3. Gerät nach Anspruch 1, **dadurch gekennzeichnet, dass** der Duplexer die Signale duplexen kann zwischen:
- einer Kette (108, 109) zur Erzeugung von Signale gemäß einer Frequenzmultiplexnorm, und
- einem ersten Ausgang einer dritten Auswahleinrichtung (106).

4. Gerät nach Anspruch 3, **dadurch gekennzeichnet, dass** es die zweite Auswahleinrichtung ermöglicht, einen Kreis zwischen der ersten Auswahleinrichtung zu schalten und:
- entweder einem zweiten Ausgang der dritten Auswahleinrichtung,
- oder einer Kette (110, 109) zur Erzeugung von Signalen gemäß einer Zeitmultiplexnorm.

5. Gerät nach Anspruch 4, **dadurch gekennzeichnet, dass** es die dritte Auswahleinrichtung ermöglicht, einen Kreis zwischen einem Empfangsschaltkreis zu schalten und:
- entweder dem Duplexer,
- oder der zweiten Auswahleinrichtung.

6. Gerät nach einem der Ansprüche 1 bis 5, **dadurch gekennzeichnet, dass** das Gerät ein Mobiltelefon ist.
